# EUROPÄISCHE PATENTSCHRIFT

(11) **EP 0 389 024 B1**
(45) Veröffentlichungstag und Bekanntmachung des Hinweises auf die Patenterteilung: **12.05.1993**
(21) Anmeldenummer: 90200546.1
(22) Anmeldetag: 08.03.1990
(51) Int. Cl.: F16D 23/02, B23P 15/14

(54) **Verfahren zur Herstellung einer Schalt- oder Schiebemuffe für KFZ-Getriebe**
Method of making a gear-change sleeve for a motor vehicle
Procédé pour la fabrication d'un manchon de changement de vitesse pour une automobile

(30) Priorität: 18.03.1989 DE 3908989
(43) Veröffentlichungstag der Anmeldung: 26.09.1990
(73) Patentinhaber: SINTERSTAHL Gesellschaft m.b.H., D-87629 Füssen (DE)
(72) Erfinder: Knoess, Walter, Dipl.-Ing., D-8958 Füssen (DE); Wollenteit, Ulrich, Dr.-Ing., D-8000 München 40 (DE)
(74) Vertreter: Lohnert, Wolfgang, Dr.

(56) Entgegenhaltungen:
- DE-B- 2 511 460
- FR-A- 1 138 203
- GB-A- 1 204 641
- US-A- 1 647 136
- US-A- 4 019 586

## Beschreibung

Die Erfindung betrifft ein Verfahren zur Herstellung einer Schalt- oder Schiebemuffe für die Sperrsynchronisierung von handgeschalteten Kfz-Getrieben mit zu einer Ebene senkrecht zur Muffenachse zumindest annähernd symmetrischer Muffen-Ausgestaltung und mit einer Verzahnung an der Muffeninnenfläche, die, von der Stirnseite aus gesehen, sich in Richtung Symmetrieebene verjüngende Zahnabschnitte aufweist.

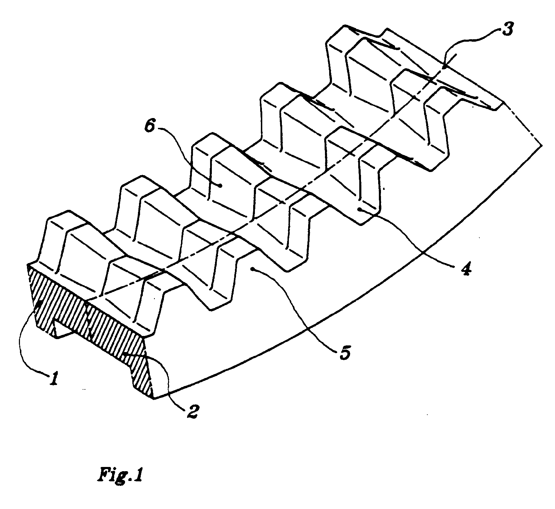

Handgeschaltete Kfz-Schaltgetriebe arbeiten heute überwiegend nach dem Prinzip der Sperr- oder Zwangssynchronisation. Durch den Schaltvorgang wird eine kraftschlüssige Verbindung zwischen der Getriebehauptwelle und dem jeweiligen Gangrad hergestellt. Die kraftschlüssige Verbindung zwischen den genannten Teilen erfolgt - bei hilfsweiser Verwendung verschiedener Synchronisierelemente - letztendlich über eine Schalt- oder Schiebemuffe. Figur 1 zeigt skizzenhaft die wesentlichen Ausgestaltungsmerkmale einer gebräuchlichen Schalt- oder Schiebemuffe.

Schalt- oder Schiebemuffen besitzen eine komplex ausgestaltete Verzahnung an der Muffen-Ringinnenseite. Beim Synchronisationsvorgang werden bekanntlich zunächst die Zähne der Innenverzahnung der Schiebemuffe an die Sperrverzahnung eines Synchronringes angelegt und im weiteren Verlauf der Synchronisation durch die Sperrverzahnung hindurch in eine Klauenverzahnung am Gangrad eingeschoben. Damit ist der Schaltvorgang beendet. Um sicherzustellen, daß sich vor allem bei Lastwechsel in einem Gang die zuvor skizzierte Verzahnung nicht wieder löst, besitzt u.a. auch die Verzahnung der Muffeninnenfläche, von der Stirnseite aus gesehen, sich nach innen, Richtung Symmetrieebene verjüngende Zahnabschnitte bzw. hinterschnittene Zahnflankenabschnitte.

Üblicherweise wird im Kfz-Getriebebau eine Schaltmuffe zum Einlegen zweier-, Gänge auf einer Welle mittels Verschieben einmal nach links, das andere Mal nach rechts verwendet, so daß es sich schon aus diesem Grund anbietet, die Schaltmuffe symmetrisch zu einer senkrecht auf der Muffen-Ringachse stehenden Mittelebene auszugestalten. Kleine Ausführungsunterschiede zwischen der linken und der rechten Halbmuffe sind beispielsweise dann üblich, wenn mit einer Schaltmuffe ein Vorwärts- und ein Rückwärtsgang eingelegt wird.

Die Synchronisierung im Schaltgetriebe, die hierfür verwendeten Bauelemente und Techniken werden beispielsweise im Aufsatz "Die Synchronisierung, ein wichtiges Bauelement unserer Schaltgetriebe" von Dipl.-Ing. E. Brügel, Dt. Zeitschrift "ZF Ring", (1988), Heft 1 näher skizziert.

Schaltmuffen lassen sich aufgrund der vorgenannten konstruktiven Ausführungsanforderungen bisher nur mittels sehr aufwendiger und teurer maschineller Zerspanungsverfahren aus einem Ringrohling herstellen.

Alternativ erfolgt die Fertigung der speziellen Zahnprofile zunächst durch spanabhebende Bearbeitung einer Vorform und durch anschließende Hinterrollung.

Die Fertigung der Schalt- oder Schiebemuffe stellt einen wesentlichen Kostenfaktor bei der Fertigung eines Getriebes dar. Es werden daher fortwährend Anstrengungen unternommen, um die Fertigungskosten für dieses Bauteil zu senken. Sie haben auch in Patenten ihren Niederschlag gefunden. Gleichwohl konnte bisher der Weg der teuren, spanabhebenden Innenbearbeitung zur Fertigung der speziellen Verzahnung in Schalt- oder Schiebemuffen nicht verlassen werden.

So beschreibt die GB-A 1 204 641 ein Bauteil für Getriebe, z.B. ein Getriebezahnrad mit seitlich angeschlossenem Reibkonus. Den unterschiedlichen Funktionen der beiden Bauteilbereiche entsprechend werden dort in einem Bauteil unterschiedliche Werkstoffe verwendet. Ein Bereich des Bauteiles, aus einem erschmolzenen Vormaterial hergestellt, wird mit einem mittels eines pulvermetallurgischen Sinter- und Schmiedeverfahrens gefertigten zweiten Teil verschweißt. Das dort genannte Verfahren ist nicht geeignet, Nachteile zu umgehen, wie sie mit der sehr aufwendigen und teuren Herstellung von Schiebemuffen nach bekannten Verfahren auftreten. Schiebemuffen sind dementsprechend im Vorbehalt nicht explizit erwähnt worden.

Die DE-B 2 511 460 betrifft eine Klauenkupplung. Das dort dargestellte Konstruktionsprinzip unterscheidet sich in wesentlichen Funktionsmerkmalen von heute üblicherweise verwendeten Konstruktionen mit Schiebemuffe und Synchronisationseinrichtungen. Während heute üblicherweise eine Schiebemuffe zwei auf eine Achse nebeneinander liegende Gänge bedient, weist die Entgegenhaltung für diese Aufgabe zwei getrennte, um die Getriebeachse "sich relativ zueinander drehende" Schiebemuffen auf. Die bei heute vorzugsweise verwendeten Ausführungen mit vorliegender Erfindung zu überwindenden Nachteile treten daher im Vorbehalt gar nicht auf.

Die Aufgabe vorliegender Erfindung besteht nun darin, ein Verfahren zur kostengünstigeren Fertigung von Schalt- oder Schiebemuffen der eingangs geschilderten Art zu entwickeln. Das Verfahren soll insbesondere die aufwendigen Techniken zur spanabhebenden Bearbeitung, wie sie bisher erforderlich waren, vermeidbar machen.

Das erfinderische Verfahren besteht in der getrennten Fertigung zweier Einzelteile, welche die zwei symmetrischen Bauteilabschnitt der Muffe bilden sowie im anschließenden Fügen der Einzelteile zu einer kompletten Schalt- oder Schiebemuffe.

Die Einzelteile besitzen entgegen den Ausgestaltungsanforderungen an eine komplette Schalt- oder Schiebemuffe keine hinterschnittenen Zahnflankenabschnitte bzw. keine sich zum Bauteilinneren hin verjüngende Zahnabschnitte.

Damit eröffnet sich für die Fertigung die Anwendung von Urformverfahren, wie Pulververpressen und Sintern oder Gießen, welche heute mit großer Präzision durchgeführt werden können. Weiterhin eignen sich - ausgehend von einer Rohform - Präzisionsumformverfahren, wie Präzisionsschmieden und Kaltfließpressen zur Herstellung der Innenverzahnung.

Angesichts der vorgenannten Verfahren zur herstellung von Schalt- oder Schiebemuffen entsprechend der vorliegenden Erfindung werden spanabhebende Verfahren an Bedeutung verlieren. Da sich gemäß Erfindung mit der Fertigung der Einzeltteile jedoch die besonders teure, maschinenaufwendige Anfertigung von hinterschnittenen Zahnflanken erübrigt, können zukünftig auch die Fertingungskosten für eine spanabhebende Bearbeitung wesentlich gesenkt werden, so daß auch die spanabhebende Fertigung der Einzelteile und deren anschließendes Fügen wesentliche Kostenvorteile gegenüber dem Stand der Technik bringt.

Für das Fügen der beiden Einzelteile zur kompletten Schalt- oder Schiebemuffe lassen sich eine Vielzahl an sich bekannter Fügeverfahren anwenden. Das gilt umsomehr, als über die Verbindungsstelle der einzelteile nur vergleichbar geringe mechanische Kräfte zwischen den Einzelteilen übertragen werden müssen. Im durchgeschalteten Zustand werden die Kräfte zwischen Getriebehauptwelle und Gangrad stets nur innerhalb des einzelnen Symmetriebereiches der kompletten Muffe übertragen, so daß die Fügestelle selbst lastfrei bleibt.

Angesichts der geometrischen Ausgestaltung derzeit üblicherweise verwendeter Schalt- oder Schiebemuffen hat sich das Fügen mittels Reibschweißung ebenso gut bewährt, wie das Abbrennstumpfschweißen oder das sogenannte "Rotations-Arc-Verfahren". Bei entsprechender Schweißnahtvorbereitung stellt auch die Schweißung mittels Elektronen- oder Laserstrahl ein vorzugsweise anwendbares Verfahren dar.
Lötverfahren lassen sich ebenso zum Fügen verwenden, insbesondere in Verbindung mit dem Sintern pulvermetallurgisch hergestellter Teile. Klebeverfahren gewinnen unter den Fügeverfahren auch für Metallteile zunehmend an Bedeutung.
Die zu verfügenden Einzelteile werden je nach der anzuwendenden Fügetechnik stumpf oder auch reib- oder formschlüssig aufeinander gebracht. Die Kontaktflächen können demzufolge Planflächen, Zahnflächen oder beispielsweise auch stufenförmig ausgestaltete Ringflächen sein.

Das erfinderische Verfahren ist nicht an die Verwendung bestimmter Werkstoffe gebunden.

Mittels des erfinderischen Verfahrens lassen sich ganz wesentliche Kosteneinsparungen bei der Herstellung von Schalt- oder Schiebemuffen erzielen, ohne daß auf die im Getriebebau geforderte Präzision der Ausführung verzichtet werden muß.

Die Erfindung wird anhand des nachfolgenden Beispieles näher beschrieben.

Eine Schiebemuffe entsprechend der Erfindung ist in Figur 1 skizziert. In der Figur ist die Symmetrieebene -3- dargestellt, entlang welcher die beiden symmetrischen Einzelteile -1- und -2- nach der getrennten Fertigung miteinander verbunden werden. Die Muffe weist an ihrer Innenfläche -4- einen Verzahnungskranz -5- auf. Die Verjüngung einzelner Zahnabschnitte -6-Richtung Symmetrieebene ist sichtbar gemacht.

Zur Herstellung der Schalt- oder Schiebemuffe mit den Merkmalen ähnlich Figur 1 wird ein legiertes Eisenpulver der Zusammensetzung gemäß DIN Normvorschlag SINT D 39 und einer mittleren Partikelgröße von etwa 75µm verwendet. Das Pulver wird in hydraulischen Pressen mit beweglichen Ober- und Unterstempeln zum Grünling verpreßt. Der Grünling wird im Durchlaufsinterofen auf verschiedenen Temperaturstufen zwischen 1120 - 1300°C während 0,5 Stunden gesintert. Anschließend wird das so entstandene Einzelteil in einer hydraulischen Presse nachkalibriert und wahlweise oberflächengehärtet.
Mittels dieser Verfahrensschritte lassen sich die in der Getriebetechnik geforderten Festigkeiten, Toleranzen und Oberflächengüten erzielen. Die beiden Einzelteile werden anschließend in die Halterung einer handelsüblichen Schweißanlage eingespannt und durch Reibschweißen miteinander verbunden.

## Patentansprüche

1. Verfahren zur Herstellung einer Schalt- oder Schiebemuffe für die Sperrsynchronisierung von handgeschalteten Kfz-Getrieben mit zu einer Ebene senkrecht zur Muffenachse zumindest annähernd symmetrischer Muffenausgestaltung und mit einer Verzahnung (5) an der Muffeninnenfläche (4), die, von der Stirnseite aus gesehen, sich in Richtung Symmetrieebene (3) verjüngende Zahnabschnitte aufweist,
**dadurch gekennzeichnet,**
daß die zwei symmetrischen Bauteilabschnitte (1,2) der Muffe getrennt als Einzelteile gefertigt und anschließend durch Fügen miteinander verbunden werden.

2. Verfahren zur Herstellung einer Schalt- oder Schiebemuffe nach Anspruch 1, dadurch gekennzeichnet, daß die Einzelteile (1,2) mittels Urformverfahren hergestellt werden.

3. Verfahren zur Herstellung einer Schalt- oder Schiebemuffe nach Anspruch 2, dadurch gekennzeichnet, daß die Einzelteile (1,2) mittels pulvermetallurgischer Verfahren durch Pressen und Sintern hergestellt werden.

4. Verfahren zur Herstellung einer Schalt- oder Schiebemuffe nach Anspruch 2, dadurch gekennzeichnet, daß die Einzelteile (1,2) mittels Gießen und mechanischer Nachbearbeitung hergestellt werden.

5. Verfahren zur Herstellung einer Schalt- oder Schiebemuffe nach Anspruch 1, dadurch gekennzeichnet, daß die Einzelteile (1,2) mittels Präzisionsumformverfahren hergestellt werden.

6. Verfahren zur Herstellung einer Schalt- oder Schiebemuffe nach Anspruch 5, dadurch gekennzeichnet, daß die Einzelteile (1,2) mittels Präzisionsschmieden hergestellt werden.

7. Verfahren zur Herstellung einer Schalt- oder Schiebemuffe nach Anspruch 1, dadurch gekennzeichnet, daß die Einzelteile (1,2) durch Reibschweißen miteinander verbunden werden.

8. Verfahren zur Herstellung einer Schalt- oder Schiebemuffe nach Anspruch 1, dadurch gekennzeichnet, daß die Einzelteile (1,2) durch Laserstrahlschweißen miteinander verbunden werden.

9. Verfahren zur Herstellung einer Schalt- oder Schiebemuffe nach Anspruch 1, dadurch gekennzeichnet, daß die Einzelteile (1,2) über eine zahnförmige Kontaktfläche miteinander verklebt werden.

## Claims

1. Method of manufacturing a gear-change or shift sleeve for locking synchronization of manually shifted vehicle transmissions, having a sleeve shape, which is at least substantially symmetrical to a plane perpendicular to the sleeve axis, and having on the sleeve inner surface (4) gear teeth (5) which, viewed from the end, have tooth portions tapering towards the plane of symmetry (3), characterized in that
the two symmetrical structural portions (1, 2) of the sleeve are manufactured separately as piece parts and are then joined together by joints.

2. Method of manufacturing a gear-change or shift sleeve according to claim 1, characterized in that the piece parts (1, 2) are manufactured using the master pattern method.

3. Method of manufacturing a gear-change or shift sleeve according to claim 2, characterized in that the piece parts (1, 2) are manufactured by pressing and sintering using the powder metallurgy method.

4. Method of manufacturing a gear-change or shift sleeve according to claim 2, characterized in that the piece parts (1, 2) are manufactured by casting and mechanical finishing.

5. Method of manufacturing a gear-change or shift sleeve according to claim 1, characterized in that the piece parts (1, 2) are manufactured by precision deformation.

6. Method of manufacturing a gear-change or shift sleeve according to claim 5, characterized in that the piece parts (1, 2) are manufactured by precision forging.

7. Method of manufacturing a gear-change or shift sleeve according to claim 1, characterized in that the piece parts (1, 2) are joined together by friction welding.

8. Method of manufacturing a gear-change or shift sleeve according to claim 1, characterized in that the piece parts (1, 2) are joined together by laser-beam welding.

9. Method of manufacturing a gear-change or shift sleeve according to claim 1, characterized in that the piece parts (1, 2) are glued to one another via a dentiform contact surface.

## Revendications

1. Procédé de fabrication d'un manchon de changement de vitesses, pour la synchronisation bloquée de boîtes de vitesse de véhicules automobiles à changement de vitesses manuel, présentant une structure de manchon au moins approximativement symétrique par rapport à un plan perpendiculaire à l'axe du manchon et pourvu, sur la surface intérieure (4) de manchon, d'une denture (5) qui présente, en vue depuis la face frontale, des parties de dents qui se rétrécissent dans la direction du plan de symétrie (3),
**caractérisé** **en ce que**
les deux éléments composants symétriques (1, 2) du manchon sont fabriqués séparément sous forme d'éléments individuels et sont ensuite reliés l'un à l'autre par des assemblages.

2. Procédé de fabrication d'un manchon de changement de vitesses selon la revendication 1, caractérisé en ce que les éléments individuels (1, 2) sont fabriqués au moyen d'un procédé à moule initial.

3. Procédé de fabrication d'un manchon de changement de vitesses selon la revendication 2, caractérisé en ce que les éléments individuels (1, 2) sont fabriqués par compression et frittage au moyen d'un procédé de métallurgie des poudres.

4. Procédé de fabrication d'un manchon de changement de vitesses selon la revendication 2, caractérisé en ce que les éléments individuels (1, 2) sont réalisés par coulée et usinage mécanique ultérieur.

5. Procédé de fabrication d'un manchon de changement de vitesses selon la revendication 1, caractérisé en ce que les éléments individuels (1, 2) sont réalisés par un procédé de formage de précision.

6. Procédé de fabrication d'un manchon selon la revendication 5, caractérisé en ce que les éléments individuels (1, 2) sont fabriqués au moyen d'un forgeage de précision.

7. Procédé de fabrication d'un manchon de vitesse selon la revendication 1, caractérisé en ce que les éléments individuels (1, 2) sont reliés l'un à l'autre par soudage par friction.

8. Procédé de fabrication d'un manchon de changement de vitesses selon la revendication 1, caractérisé en ce que les éléments individuels (1, 2) sont reliés entre eux par soudage aux rayons laser.

9. Procédé de fabrication d'un manchon de changement de vitesses selon la revendication 1, caractérisé en ce que les éléments individuels (1, 2) sont collés entre eux au moyen d'une surface de contact en forme de dents.
